# EUROPEAN PATENT APPLICATION

(11) **EP 4 757 461 A1**
(43) Date of publication of application: **10.06.2026**
(21) Application number: 23946959.6
(22) Date of filing: 28.07.2023
(51) Int. Cl.: H04W 72/12, H04W 28/06

(54) **RADIO FRAME TRANSMISSION METHOD, STATION DEVICE, ACCESS POINT DEVICE, AND COMMUNICATION SYSTEM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2023/109995
(87) International publication number: WO 2025/025003

(57) **Abstract**

Embodiments of the present invention relate to a radio frame transmission method, a station device, an access point device, and a communication system. The radio frame transmission method comprises: a station device STA determines a first radio frame, wherein the first radio frame comprises first identifier information, and the first identifier information identifies delay bound parameter information of a low-latency service transmitted by the station device. In this way, for an aperiodic low-latency service, such as a burst low-latency service, a station device notifies an access point device by means of first identifier information, such that the access point device configures transmission resources for the low-latency service on the basis of a delay bound parameter, thereby implementing transmission of the low-latency service.

## Description

### FIELD

The disclosure relates to the field of communication technologies, and in particular to a method, a station, an access point device and a communication system for transmitting a wireless frame.

### BACKGROUND

Currently, research in the area of Wi-Fi technology, such as ultra high reliability (UHR), aims to enhance reliability of wireless local area network (WLAN) connectivity, reduce latency, improve manageability, increase throughput at different signal to noise ratio (SNR) levels, and reduce device-level power consumption.

In the UHR, the transmission of a low latency service will be further enhanced. Therefore, a transmission mechanism of the low latency service needs to be further improved to ensure transmission requirements of the UHR.

### SUMMARY

The embodiments of the present disclosure provide a method, a station, an access point device and a communication system for transmitting a wireless frame to further improve a transmission mechanism of a low-latency service.

In an aspect, the embodiments of the present disclosure provide a method for transmitting a wireless frame, including:
determining, by a station (STA), a first wireless frame, where the first wireless frame includes first identification information, and the first identification information identifies delay bound parameter information of a low-latency service transmitted by the station; and
transmitting the first wireless frame.

In another aspect, the embodiments of the present disclosure provide a method for transmitting a wireless frame, including:
receiving, by an access point (AP) device, a first wireless frame, where the first wireless frame includes first identification information, and the first identification information identifies delay bound parameter information of a low-latency service transmitted by a station.

In another aspect, the embodiments of the present disclosure provide a station (STA), including:
a determining module, configured to determine a first wireless frame, where the first wireless frame includes first identification information, and the first identification information identifies that delay bound parameter information of a low-latency service transmitted by the station; and
a sending module, configured to transmit the first wireless frame.

In another aspect, the embodiments of the present disclosure provide an access point (AP) device, including:
a first receiving module, configured to receive a first wireless frame,
where the first wireless frame includes first identification information, and the first identification information identifies delay bound parameter information of a low-latency service transmitted by a station.

In another aspect, the embodiments of the present disclosure provide a station (STA), including:
one or more processors;
where the STA is configured to perform the method for transmitting the wireless frame according to the embodiments of the present disclosure.

In another aspect, the embodiments of the present disclosure provide an access point (AP) device, including:
one or more processors;
where the AP device is configured to perform the method for transmitting the wireless frame according to the embodiments of the present disclosure.

The embodiments of the present disclosure further provide a communication system, including a station (STA) and an access point (AP) device, where the STA is configured to implement the method for transmitting the wireless frame according to the embodiments of the present disclosure, and the AP device is configured to implement the method for transmitting the wireless frame according to the embodiments of the present disclosure.

The embodiments of the present disclosure further provide a storage medium for storing instructions that, when executed on a communication device, cause the communication device to implement the method for transmitting the wireless frame according to the embodiments of the present disclosure or the method for transmitting the wireless frame according to the embodiments of the present disclosure.

In the embodiments of the present disclosure, a station transmits a first wireless frame, and the first wireless frame includes first identification information. The first identification information is used to indicate delay bound parameter information of a low-latency service transmitted by the station, enabling an access point device to acquire the delay bound parameter information of the low-latency service and receive data of the low-latency service based on the delay bound parameter information. In this way, for an aperiodic low-latency service, such as a burst low-latency service, the station notifies the access point device through the first identification information, enabling the access point device to configure a transmission resource for the low-latency service based on a delay bound parameter, thereby realizing the transmission of the low-latency service.

The additional aspects and advantages of the embodiments of the present disclosure will be described in the following description section. These will become apparent from the description below, or may be understood through the practice of the present disclosure.

### BRIEF DESCRIPTION OF THE DRAWINGS

In order to illustrate technical solutions in the embodiments of the present disclosure more clearly, the drawings required for describing the embodiments are introduced below. These drawings below are only some embodiments of the present disclosure and do not specifically limit the scope of the present disclosure.
FIG. 1 is an exemplary diagram illustrating an architecture of a communication system according to an embodiment of the disclosure;
FIG. 2 is an exemplary interaction diagram of a method according to an embodiment of the disclosure;
FIG. 3 is a flow chart illustrating a method for transmitting a wireless frame according to an embodiment of the disclosure.
FIG. 4 is another flow chart illustrating a method for transmitting a wireless frame according to an embodiment of the disclosure.
FIG. 5 is a block diagram illustrating a station according to an embodiment of the disclosure.
FIG. 6 is a block diagram illustrating an access point device according to an embodiment of the disclosure.
FIG. 7 is a block diagram illustrating a terminal according to an embodiment of the disclosure.
FIG. 8 is a block diagram illustrating a chip according to an embodiment of the disclosure.

### DETAILED DESCRIPTION

The embodiments of the present disclosure provide a method, a station, an access point device and a communication system for transmitting a wireless frame.

In a first aspect, the embodiments of the present disclosure provide a method for transmitting a wireless frame, including: determining, by a station (STA), a first wireless frame, where the first wireless frame includes first identification information, and the first identification information identifies delay bound parameter information of a low-latency service transmitted by the station; and transmitting the first wireless frame.

In the above embodiments, the first identification information is used to indicate the delay bound parameter information of the low-latency service transmitted by the station, enabling an access point device to acquire the delay bound parameter information of the low-latency service and receive data of the low-latency service based on the delay bound parameter information. In this way, for an aperiodic low-latency service, such as a burst low-latency service, a station 101 notifies the access point device through the first identification information, enabling the access point device to configure a transmission resource for the low-latency service based on a delay bound parameter, thereby realizing the transmission of the low-latency service.

In combination with some embodiments of the first aspect, in some embodiments, the first identification information includes at least one of: a transmission identifier (TID) of the low-latency service; or a delay tolerance parameter of the low-latency service.

In the above embodiments, the TID is used to identify the low-latency service, for example, to determine a link mapped to the low-latency service, thereby facilitating the access point device to configure the transmission resource for the low-latency service based on the link.

A delay tolerance parameter (also referred to as a latency tolerance level) is used to identify a value of the delay tolerance level of the low-latency service, such as a maximum transmission delay allowed for the low-latency service.

In combination with some embodiments of the first aspect, in some embodiments, a lifetime of a data frame of the low-latency service is: a duration indicated by the delay bound parameter information; or a sum of a duration indicated by the delay bound parameter information and a duration indicated by a delay tolerance parameter.

In the above embodiments, the lifetime of the data frame of the low-latency service may be the duration indicated by the delay bound parameter information. If the delay tolerance parameter is included in the first identification information, the lifetime should also be increased by the duration indicated by the delay tolerance parameter.

Optionally, the lifetime may be applied across multiple links transmitting the low-latency service.

In combination with some embodiments of the first aspect, in some embodiments, a timing synchronization function (TSF) parameter of a transmit link of the first wireless frame is used as a time reference of the delay bound parameter information to facilitate a time synchronization.

In combination with some embodiments of the first aspect, in some embodiments, the first wireless frame includes a quality of service (QoS) data frame or a resource request message frame.

In the above embodiments, in a case that the first wireless frame is the QoS data frame, the first identification information is carried in a media access control (MAC) frame header of the first wireless frame, for example, in a frame control field of the MAC frame header. The resource request message frame, such as a scheduling request frame, is used to request an access point device 102 to configure an uplink transmission resource for the station 101.

In combination with some embodiments of the first aspect, in some embodiments, the method further includes receiving a response frame sent by the AP device. The response frame includes link bitmap information and/or transmission start time information of the low-latency service.

In the above embodiments, the link bitmap information indicates whether the low-latency service is transmitted on a link corresponding to the link bitmap information, that is, whether the TID of the low latency service is mapped to the link corresponding to the link bitmap information.

The transmission start time information of the low-latency service is used by the station to determine time to start transmitting the data of the low-latency service.

In combination with some embodiments of the first aspect, in some embodiments, the link bitmap information is set to a first parameter value to identify that the low-latency service is transmitted on a first link corresponding to the link bitmap information, and the first link is a link mapped to the TID of the low-latency service.

In the above embodiments, the link bitmap information is set to "1" to identity that the TID of the low-latency service is mapped to the link corresponding to the link bitmap information, that is, the link is the first link. The link bitmap information is set to "0" to identity that the TID of the low-latency service is not mapped to the link corresponding to the link bitmap information, that is, the link is not the first link.

In combination with some embodiments of the first aspect, in some embodiments, the STA supports an eMLSR mode, and the first link is an eMLSR link.

In the above embodiments, if the station supports only the eMLSR mode, the first link is the eMLSR link, so that the station 101 transmits the low-latency service on the eMLSR link, thereby reducing interference from other frames except an initial control frame described above.

In combination with some embodiments of the first aspect, in some embodiments, the method further includes: receiving a trigger frame sent by the AP on the first link; and transmitting the data of the low-latency service based on an uplink transmission resource indicated in the trigger frame.

In the above embodiments, the station receives, on the first link, the trigger frame sent by the AP and transmits the data of the low-latency service using the uplink transmission resource based on the uplink transmission resources indicated in the trigger frame.

In combination with some embodiments of the first aspect, in some embodiments, the method further includes: the TSF parameter of the transmit link of the first wireless frame is used as a time reference of the transmission start time information; and the transmission start time information includes, for each link, a TSF offset parameter relative to the TSF parameter of the transmit link

In the above embodiments, the TSF parameter of the transmit link of the first wireless frame is used as a reference time point. Since TSF parameters for each link may be different, the TSF offset parameter may be carried in the transmission start time information to synchronize time for each link.

In addition, if the station 101 has already obtained a TSF offset value for a corresponding link during an initial association process, the TSF offset parameter may not be carried in the transmission start time information. Instead, the TSF parameter is determined by the station 101 based on the TSF offset value obtained during the initial association process, thereby performing the time synchronization.

In a second aspect, the embodiments of the present disclosure provide a method for transmitting a wireless frame, including: receiving, by an access point (AP) device, a first wireless frame, where the first wireless frame includes first identification information, and the first identification information identifies delay bound parameter information of a low-latency service transmitted by a station.

In combination with some embodiments of the second aspect, in some embodiments, the first identification information includes at least one of: a transmission identifier (TID) of the low-latency service; or a delay tolerance parameter of the low-latency service.

In combination with some embodiments of the second aspect, in some embodiments, a lifetime of a data frame of the low-latency service is: a duration indicated by the delay bound parameter information; or a sum of a duration indicated by the delay bound parameter information and a duration indicated by a delay tolerance parameter.

In combination with some embodiments of the second aspect, in some embodiments, a timing synchronization function (TSF) parameter of a transmit link of the first wireless frame is used as a time reference of the delay bound parameter information.

In combination with some embodiments of the second aspect, in some embodiments, the first wireless frame includes a quality of service (QoS) data frame or a resource request message frame.

In combination with some embodiments of the second aspect, in some embodiments, the method further includes sending a response frame, where the response frame includes link bitmap information and/or transmission start time information of the low-latency service.

In combination with some embodiments of the second aspect, in some embodiments, the link bitmap information is set to a first parameter value to identify that the low-latency service is transmitted on a first link corresponding to the link bitmap information, and the first link is a link mapped to a TID of the low-latency service.

In combination with some embodiments of the second aspect, in some embodiments, in some embodiments, the STA supports an enhanced multi-link single radio (eMLSR) mode, and the first link is an eMLSR link.

In combination with some embodiments of the second aspect, in some embodiments, the method further includes sending a trigger frame on the first link, where the trigger frame indicates an uplink transmission resource for transmitting data of the low-latency service.

In combination with some embodiments of the second aspect, in some embodiments, a TSF parameter of a transmit link of the first wireless frame is used as a time reference of the transmission start time information; and the transmission start time information includes, for each link, a TSF offset parameter relative to the TSF parameter of the transmit link.

In a third aspect, the embodiments of the present disclosure provide a station (STA). The station includes at least one of a determining module or a sending module. The station is configured to perform the optional implementations described in the first aspect.

In a fourth aspect, the embodiments of the present disclosure provide an access point (AP) device including a first receiving module. The access point device is configured to perform the optional implementations described in the second aspect.

In a fifth aspect, the embodiments of the present disclosure provide a station (STA) including one or more processors. The station is configured to perform the optional implementations described in the first aspect.

In a sixth aspect, the embodiments of the present disclosure provide an access point (AP) device including one or more processors. The access point device is configured to perform the optional implementations described in the second aspect.

In a seventh aspect, the embodiments of the present disclosure provide a communication device, including a station (STA) and an access point (AP) device. The station is configured to perform the optional implementations described in the first aspect. The access point device is configured to perform the optional implementations described in the second aspect.

In an eighth aspect, the embodiments of the present disclosure provide a storage medium for storing instructions that, when executed on a communication device, cause the communication device to perform the optional implementations described in the first aspect or the second aspect.

In a ninth aspect, the embodiments of the present disclosure provide a program product, when executed on a communication device, cause the communication device to perform the method described in the optional implementations of the first aspect or the second aspect.

In a tenth aspect, the embodiments of the present disclosure provide computer program, when executed on a computer, cause the computer to perform the method described in the optional implementations of the first aspect or the second aspect.

In an eleventh aspect, the embodiments of the present disclosure provide a chip or a chip system. The chip or chip system includes a processing circuit, which is configured to perform the method described in the optional implementations of the first aspect or the second aspect.

It can be understood that the aforementioned station, access point device, communication system, storage medium, program product, computer program, chip, or chip system are all used to perform the methods provided in the embodiments of the present disclosure. Therefore, beneficial effects they may achieve may refer to those described in the corresponding methods, and will not repeat here.

The embodiments of the present disclosure provide a method, a station, an access point device, and a communication system for transmitting a wireless frame. In some embodiments, a term "a method for transmitting a wireless frame" may be used interchangeably with terms such as "a method for sending a wireless frame" or "a method for sending a wireless frame". A term "an information processing system" may be used interchangeably with terms such as "a communication system" or the like.

The embodiments of the present disclosure are not exhaustive, and are presented only as illustrations of some embodiments, and are not intended to impose specific limitations on the scope of protection of the present disclosure. In the absence of contradiction,, each step in a certain embodiment may be implemented as an independent embodiment, and the steps may be combined arbitrarily. For example, a solution after removing some steps in a certain embodiment may also be implemented as an independent embodiment, and an order of the steps in a certain embodiment may be exchanged arbitrarily. In addition, an optional implementation in a certain embodiment may be combined arbitrarily. Moreover, the embodiments may be combined arbitrarily, for example, some or all of the steps of different embodiments may be combined arbitrarily, and a certain embodiment may be combined arbitrarily with an optional implementation of other embodiments.

In the embodiments of the present disclosure, unless otherwise specified or there is a logical conflict, terms and/or descriptions are consistent across embodiments and may be referenced to each other, and technical features in different embodiments may be combined to form a new embodiment based on their internal logical relationships.

The terms used in the embodiments of the present disclosure are only for the purpose of describing specific embodiments and are not intended to limit the present disclosure.

In the embodiments of the present disclosure, a term "multiple" means two or more.

In some embodiments, the terms "at least one of ...", "one or more", "a plurality of" and "multiple" and the like may be used interchangeably.

In some embodiments, expressions such as "at least one of A and B", "A and/or B", "A in one case, B in another case", "in response to a case A, in response to another case B", etc., may, depending on circumstances, include the following technical solutions: in some embodiments, A (A is performed independently of B); in some embodiments, B (B is performed independently of A); in some embodiments, selecting to perform either A or B (A and B are selectively performed); in some embodiments, A and B (both A and B are performed). When there are more branches such as A, B, C, etc., the above is also similar. The same applies where there are more branches such as A, B, C, and the like.

In some embodiments, expressions such as "A or B" may, depending on circumstances, include the following technical solutions: in some embodiments, A (A is performed independently of B); in some embodiments, B (B is performed independently of A); in some embodiments, selecting to perform either A or B (A and B are selectively performed). The same applies where there are more branches such as A, B, C, and the like.

Prefixes such as "first" and "second" in the embodiments of the present disclosure are only used to distinguish different description objects, and do not constitute restrictions on a position, order, priority, quantity or content of the description objects. Statement of the description object refers to descriptions in the context of the claims or the embodiments, and should not constitute unnecessary restrictions due to the use of the prefixes. For example, if the description object is a "field", an ordinal number before the "field" in a "first field" and the a "second field" does not limit the position or order between the "fields", and the "first" and "second" do not limit whether the "fields" they modified are in a same message, nor do they limit the order of the "first field" and the "second field". As another example, if the description object is a "level", an ordinal number before the "level" in the "first level" and the "second level" does not limit the priority between the "levels". As another example, a number of the description objects is not limited by the ordinal number, and may be one or more. Taking a "first apparatus" as an example, a number of "apparatus" may be one or more. In addition, objects modified by different prefixes may be the same or different. For example, if the description object is "apparatus", the "first apparatus" and a "second device" may be a same apparatus or different apparatus, and their types may be the same or different. As another example, if the description object is "information", "first information" and "second information" may be same information or different information, and their contents may be the same or different.

In some embodiments, "include A", "contain A", "used to indicate A", and "carry A" may be interpreted as directly carrying A or indirectly indicating A.

In some embodiments, terms such as "in response to ...", "in response to determining ...", "in a case of ...", "at a time of ...", "when ...", "if ...", "in case ..." etc. may be used interchangeably.

In some embodiments, terms such as "greater than", "greater than or equal to", "not less than", "more than", "more than or equal to", "not less than", "higher than", "higher than or equal to", "not lower than", and "above" may be used interchangeably, and terms such as "less than", "less than or equal to", "not greater than", "less than", "less than or equal to", "no more than", "lower than", "lower than or equal to", "not higher than" and "below" may be used interchangeably.

In some embodiments, apparatus and device may be interpreted as physical or virtual, and their names are not limited to names recorded in the embodiments. In some cases, they may also be understood as "equipment", "device", "circuit", "network element", "node", "function", "unit", "section"", "system", "network", "chip", "chip system", "entity", "subject", etc.

In some embodiments, "network" may be interpreted as an apparatus included in a network, such as an access network device, a core network device, etc.

In some embodiments, acquisition of data and information, etc. may comply with laws and regulations of the country where the data and information is obtained.

In some embodiments, the data and information, etc. may be obtained after obtaining user's consent.

In addition, each element, each row, or each column in a table of the embodiments of the present disclosure may be implemented as an independent embodiment, and a combination of any elements, any rows, and any columns may also be implemented as an independent embodiment.

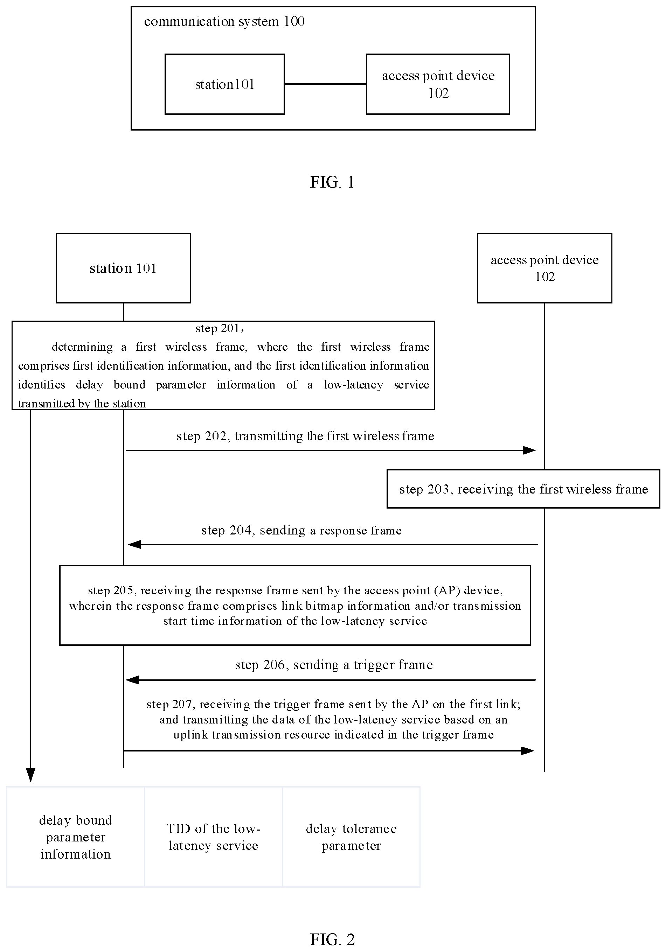

FIG. 1 is an exemplary diagram illustrating an architecture of a communication system according to an embodiment of the disclosure.

As shown in FIG. 1, a communication system 100 includes a station (STA) 101 and an access point (AP) device 102

In some embodiments, the station 101 includes, for example, a wireless communication chip, a wireless sensor, or a wireless communication terminal that supports WiFi communication function. Optionally, the wireless communication terminal is, for example, at least one of: a mobile phone, a wearable device, an internet of things device that supports the WiFi communication function, a vehicle with the WiFi communication function, a smart vehicle, a pad, a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home, but is not limited thereto.

Specifically, the station 101 may be a terminal or a network device with a wireless fidelity (WiFi) chip. Optionally, the station 101 may support multiple WLAN standards such as 802.11ax, 802.11be, 802.11ac, 802.11n, 802.11g, 802.11b and 802.11a, as well as support a next generation 802.11 protocol, but is not limited thereto.

In some embodiments, the access point device 102 may be an access point for a mobile terminal to enter a wired network. The AP is equivalent to a bridge connecting the wired network and a wireless network. Its main function is to connect various wireless network clients together and then connect the wireless network to the Ethernet. Specifically, the AP may be the terminal or the network device with the wireless fidelity chip. Optionally, the AP may support multiple WLAN standards such as 802.11ax, 802.11be, 802.11ac, 802.11n, 802.11g, 802.11b and 802.11a, as well as support the next generation 802.11 protocol, but is not limited thereto.

Optionally, in an embodiment of the present disclosure, the AP and STA may be a device supporting multiple connections. For example, the AP and STA may be respectively represented as an access point multi-link device (AP MLD) and a non-access point multi-link device (Non-AP MLD). The AP MLD may represent an access point supporting multi-connection communication functions, and the non-AP MLD may represent a station supporting the multi-connection communication functions.

It can be understood that the communication system described in the embodiment of the present disclosure is for the purpose of illustrating the technical solution of the embodiment of the present disclosure more clearly, and does not constitute a limitation on the technical solution proposed in the embodiment of the present disclosure. A person of ordinary skill in the art may recognize that with an evolution of a system architecture and emergence of a new business scenario, the technical solution proposed in the embodiment of the present disclosure is also applicable to similar technical problems.

The following embodiments of the present disclosure may be applied to the communication system 100 shown in FIG. 1, or part of entities, but are not limited thereto. The entities shown in FIG. 1 are examples, and the communication system may include all or part of the entities in FIG. 1, or may include other entities other than FIG. 1. A number and form of the entities are arbitrary. The entities may be physical or virtual. A connection relationship between the entities is an example. The entities may be connected or disconnected to each other. A connection between the entities may be in any manner, and the connection may be direct connection or an indirect connection, and may be a wired connection or a wireless connection.

The embodiments of the present disclosure may be applied to a wireless local area network (WLAN), such as a local area network using the 802.11 series of protocols. In a WLAN, a basic service set (BSS) is a basic component of the WLAN. A BSS network is composed of stations with a certain association within a specific coverage area. A case of association is that stations communicate directly with each other in an ad hoc network, which is referred to as an independent BSS (IBSS). Another more common case is that there is only one central station in the BSS network that is dedicated to managing the BSS, which is referred to as the access point device, and all other STAs in the BSS network are associated with it. Other stations in the BSS network that are not central stations are referred to as terminals, also referred to as non-AP STAs, and terminals and non-AP STAs are collectively referred to as the STAs. When describing the STAs, there is no need to distinguish between the APs and the non-AP STAs. In a same BSS network, due to a distance or a transmission power, etc., a STA cannot detect other STAs that are relatively far away from it, making them becoming hidden nodes for each other.

FIG. 2 is an exemplary interaction diagram of a method for transmitting a wireless frame according to an embodiment of the disclosure. As shown in FIG. 2, the method may include the following steps.

In step 201, a station 101 determines a first wireless frame, where the first wireless frame includes first identification information, and the first identification information identifies delay bound parameter information of a low-latency service transmitted by the station.

In the UHR, a transmission of the low-latency service will be further enhanced. In a low-latency transmission scenario, real-time data traffic from many applications imposes a strict delay requirement. The low-latency service is a service with an average or maximum delay on an order of several milliseconds to tens of milliseconds, and the applications require that real-time data traffic exhibit an extremely low jitter and has a high reliability.

In the embodiments of the present disclosure, the first wireless frame is determined by the station 101, and the first identification information is carried in the first wireless frame. The first identification information is used to identify the delay bound parameter information of the low-latency service transmitted by the station.

The delay bound parameter information is used to indicate a maximum amount of time allowed to transmit an MAC service data unit (MSDU) or an aggregation of the MSDUs (A-MSDU) of a corresponding service flow. For example, the delay bound parameter information includes an unsigned integer, and the unsigned integer is in a unit of microseconds. Specifically, for example, if the delay bound parameter information identified by the first identification information indicates that a delay bound is 10 milliseconds, a data frame of the low-latency service needs to be sent within 10 milliseconds after sending the first wireless frame.

In step 202, the station 101 transmits the first wireless frame.

The station 101 transmits the first wireless frame, enabling an access point device 102 to acquire the delay bound parameter information of the low-latency service and receive data of the low-latency service based on the delay bound parameter information. In this way, for an aperiodic low-latency service, such as a burst low-latency service, the station 101 notifies the access point device 102 through the first identification information, enabling the access point device 102 to configure a transmission resource for the low-latency service based on a delay bound parameter, thereby realizing a transmission of the low-latency service.

In some embodiments, the first identification information includes at least one of: a transmission identifier (TID) of the low-latency service; or a delay tolerance parameter of the low-latency service.

The TID is used to identify the low-latency service, for example, to determine a link mapped to the low-latency service, thereby facilitating the access point device 102 to configure the transmission resource for the low-latency service based on the link.

The delay tolerance parameter (also referred to as a latency tolerance level) is used to identify a value of the delay tolerance level of the low-latency service, such as a maximum transmission delay allowed for the low-latency service.

In some embodiments, a lifetime of a data frame of the low-latency service is: a duration indicated by the delay bound parameter information; or a sum of a duration indicated by the delay bound parameter information and a duration indicated by a delay tolerance parameter.

The lifetime of the data frame of the low-latency service may be the duration indicated by the delay bound parameter information. If the delay tolerance parameter is included in the first identification information, the lifetime should also be increased by the duration indicated by the delay tolerance parameter.

Optionally, the lifetime may be applied across multiple links transmitting the low-latency service.

In some embodiments, a timing synchronization function (TSF) parameter of a transmit link of the first wireless frame is used as a time reference of the delay bound parameter information to facilitate a time synchronization.

In some embodiments, the first wireless frame includes a quality of service (QoS) data frame or a resource request message frame. For example, in a case that the first wireless frame is the QoS data frame, the first identification information is carried in a media access control (MAC) frame header of the first wireless frame, for example, in a frame control field of the MAC frame header. The resource request message frame, such as a scheduling request frame, is used to request the access point device 102 to configure an uplink transmission resource for the station 101.

In step 203, the access point device 102 receives the first wireless frame.

The access point device 102 receives the first wireless frame, acquires the delay bound parameter information of the low-latency service and receive the data of the low-latency service based on the delay bound parameter information. In this way, for the aperiodic low-latency service, such as the burst low-latency service, the station 101 notifies the access point device 102 through the first identification information, enabling the access point device 102 to configure the transmission resource for the low-latency service based on a delay bound parameter, thereby realizing the transmission of the low-latency service.

In step 204, the access point device 102 sends a response frame to the station 101.

The access point device 102 coordinates resources for the station 101 to transmit an uplink low-latency service, based on a requirement of the delay bound parameter of the low latency service in the first identification information, and replies, through the response frame, to the station 101 with the transmission resource configured.

In step 205, the station 101 receives the response frame sent by the access point device 102.

The response frame includes link bitmap information and/or transmission start time information of the low-latency service.

The link bitmap information indicates whether the low-latency service is transmitted on a link corresponding to the link bitmap information, that is, whether the TID of the low latency service is mapped to the link corresponding to the link bitmap information.

The transmission start time information of the low-latency service is used by the station 101 to determine time to start transmitting the data of the low-latency service.

In some embodiments, a TSF parameter of a transmit link of the first wireless frame is used as a time reference of the transmission start time information, and the transmission start time information includes, for each link, a TSF offset parameter relative to the TSF parameter of the transmit link.

The TSF parameter of the transmit link of the first wireless frame is used as a reference timepoint. Since TSF parameters for each link may be different, the TSF offset parameter may be carried in the transmission start time information to synchronize time for each link.

In addition, if the station 101 has already obtained a TSF offset value for a corresponding link during an initial association process, the TSF offset parameter may not be carried in the transmission start time information. Instead, the TSF parameter is determined by the station 101 based on the TSF offset value obtained during the initial association process, thereby performing the time synchronization.

In some embodiments, the link bitmap information is set to a first parameter value to identify that the low-latency service is transmitted on a first link corresponding to the link bitmap information, and the first link is a link mapped to the TID of the low-latency service.

For example, the link bitmap information is set to "1" to identity that the TID of the low-latency service is mapped to the link corresponding to the link bitmap information, that is, the link is the first link. The link bitmap information is set to "0" to identity that the TID of the low-latency service is not mapped to the link corresponding to the link bitmap information, that is, the link is not the first link.

In some embodiments, the STA supports an enhanced multi-link single radio (eMLSR) mode, and the first link is an eMLSR link.

The eMLSR mode is mainly used for a non-AP MLD, In this mode, the non-AP MLD may only perform a listening operation on a channel and receive an initial control frame, sent by an AP MLD, in a form of an orthogonal frequency division multiplexing (OFDM) physical layer protocol data unit (PPDU) or a non-high throughput (HT) duplicate (non-HT duplicate) PPDU, and other types of frames are usually not supported to be received. Therefore, if the station 101 supports only the eMLSR mode, the first link is the eMLSR link, so that the station 101 transmits the low-latency service on the eMLSR link, thereby reducing interference from other frames except the initial control frame described above.

In step 206, the access point device 102 sends a trigger frame.

The access point device 102 sends the trigger frame to the station 101, and carries the uplink transmission resource configured for the low-latency service in the trigger frame. The transmission resource is, for example a resource units (RU) or a multiple resource unit (MRU), enabling the station 101 to transmit the data of the low-latency service using the transmission resource.

In step 207, the station 101 receives the trigger frame sent by the AP on the first link and transmits the data of the low-latency service based on the uplink transmission resource indicated in the trigger frame.

The station 101 receives, on the first link, the trigger frame sent by the AP and transmits the data of the low-latency service using the uplink transmission resource based on the uplink transmission resources indicated in the trigger frame.

In the embodiments of the present disclosure, the station 101 transmits the first wireless frame, and the first wireless frame includes the first identification information. The first identification information is used to indicate the delay bound parameter information of the low-latency service transmitted by the station, enabling the access point device 102 to acquire the delay bound parameter information of the low-latency service and receive the data of the low-latency service based on the delay bound parameter information. In this way, for the aperiodic low-latency service, such as the burst low-latency service, the station 101 notifies the access point device 102 through the first identification information, enabling the access point device 102 to configure the transmission resource for the low-latency service based on the delay bound parameter, thereby realizing the transmission of the low-latency service.

In some embodiments, terms such as "moment", "time point", "time", and "time position" may be used interchangeably, and terms such as "duration", "period", "time window", "window", and "time" may be used interchangeably.

In some embodiments, terms such as "wireless access scheme", "waveform", etc. may be used interchangeably.

In some embodiments, terms such as "certain", "preseted", "preset", "set", "indicated", "a certain", "any", and "first" may be used interchangeably, and terms such as "specific A", "preseted A", "preset A", "set A", "indicated A", "a certain A", "any of A", and "first A" may be interpreted as an "A" pre-defined in a protocol, etc., or as an "A" obtained by setting, configuring, or indicating, etc., or may also be interpreted as "specific A", "a certain A", "any of A", or "first A", etc., but is not limited thereto.

In some embodiments, a determination or judgment may be performed through a value (0 or 1) represented by 1 bit, by a true or false value (boolean value) represented by true or false, or by a comparison of numerical values (for example, a comparison with a predetermined value), but is not limited thereto.

In some embodiments, a term "not expecting to receive" may be interpreted as not receiving data on a time domain resource and/or a frequency domain resource, or as not performing a subsequent processing on the data after receiving the data. A term "not expecting to send" may be interpreted as not sending data, or as sending the data but not expecting a recipient to respond to a sent content.

The method for transmitting the wireless frame involved in the embodiments of the present disclosure may include at least one of the aforementioned steps and embodiments. For example, the step 201 may be implemented as an independent embodiment, the step 202 may be implemented as an independent embodiment, the step 203 may be implemented as an independent embodiment, the step 204 may be implemented as an independent embodiment, the step 205 may be implemented as an independent embodiment, the step 206 may be implemented as an independent embodiment, and the step 207 may be implemented as an independent embodiment. A combination of the step 201, the step 202 and the step 203 may be implemented as an independent embodiment, a combination of the step 204 and the step 205 may be implemented as an independent embodiment, and a combination of the step 206 and the step 207 may be implemented as an independent embodiment but is not limited thereto.

In some embodiments, reference may be made to other optional implementations recorded before or after the description corresponding to FIG. 2.

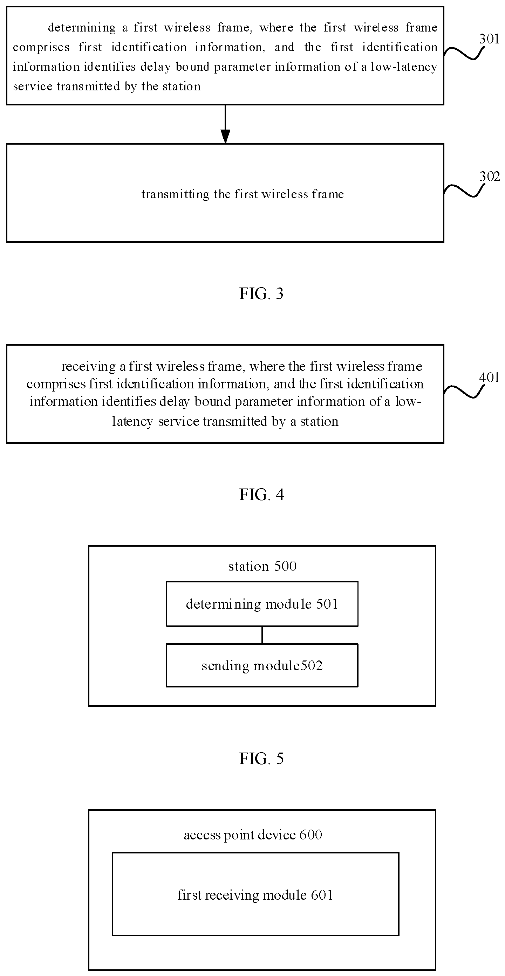

FIG. 3 is an exemplary interaction diagram of a method for transmitting a wireless frame according to an embodiment of the disclosure.

As shown in FIG. 3, the method is performed by a station 101, and the method may include the following steps.

In step 301, a station (STA) determines a first wireless frame, where the first wireless frame includes first identification information, and the first identification information identifies delay bound parameter information of a low-latency service transmitted by the station.

In step 301, the STA transmits the first wireless frame.

Optionally, in the embodiments of the present disclosure, the first identification information includes at least one of: a transmission identifier (TID) of the low-latency service; or a delay tolerance parameter of the low-latency service.

Optionally, in the embodiments of the present disclosure, a lifetime of a data frame of the low-latency service is: a duration indicated by the delay bound parameter information; or a sum of a duration indicated by the delay bound parameter information and a duration indicated by a delay tolerance parameter.

Optionally, in the embodiments of the present disclosure, a timing synchronization function (TSF) parameter of a transmit link of the first wireless frame is used as a time reference of the delay bound parameter information.

Optionally, in the embodiments of the present disclosure, the first wireless frame includes a quality of service (QoS) data frame or a resource request message frame.

Optionally, in the embodiments of the present disclosure, the method further includes the following steps.

In step 305, the STA receives a response frame sent by the access point (AP) device.

The response frame includes link bitmap information and/or transmission start time information of the low-latency service.

Optionally, in the embodiments of the present disclosure, the link bitmap information is set to a first parameter value to identify that the low-latency service is transmitted on a first link corresponding to the link bitmap information, and the first link is a link mapped to the TID of the low-latency service.

Optionally, in the embodiments of the present disclosure, the STA supports an eMLSR mode, and the first link is an eMLSR link.

Optionally, in the embodiments of the present disclosure, the method further includes the following steps.

In step 307, the STA receives a trigger frame sent by the AP on the first link.

In step 308, the STA transmits data of the low-latency service based on an uplink transmission resource indicated in the trigger frame.

Optionally, in the embodiments of the present disclosure, a TSF parameter of a transmit link of the first wireless frame is used as a time reference of the transmission start time information, and the transmission start time information includes, for each link, a TSF offset parameter relative to the TSF parameter of the transmit link.

The method for transmitting the wireless frame involved in the embodiments of the present disclosure may include at least one of the aforementioned steps and embodiments. For example, the step 301 may be implemented as an independent embodiment, the step 302 may be implemented as an independent embodiment, the step 305 may be implemented as an independent embodiment, and the step 308 may be implemented as an independent embodiment. A combination of the step 301 and the step 302 may be implemented as an independent embodiment, and a combination of the step 307 and the step 308 may be implemented as an independent embodiment but is not limited thereto.

In some embodiments, reference may be made to other optional implementations recorded before or after the description corresponding to FIG. 3.

FIG. 4 is another exemplary interaction diagram of a method for transmitting a wireless frame according to an embodiment of the disclosure.

As shown in FIG. 4, the method is performed by an access point device 102, and the method may include the following steps.

In step 401, the access point (AP) device receives a first wireless frame, where the first wireless frame includes first identification information, and the first identification information identifies delay bound parameter information of a low-latency service transmitted by the station.

Optionally, in the embodiments of the present disclosure, the first identification information includes at least one of: a transmission identifier (TID) of the low-latency service; or a delay tolerance parameter of the low-latency service.

Optionally, in the embodiments of the present disclosure, a lifetime of a data frame of the low-latency service is: a duration indicated by the delay bound parameter information; or a sum of a duration indicated by the delay bound parameter information and a duration indicated by a delay tolerance parameter.

Optionally, in the embodiments of the present disclosure, a timing synchronization function (TSF) parameter of a transmit link of the first wireless frame is used as a time reference of the delay bound parameter information.

Optionally, in the embodiments of the present disclosure, the first wireless frame includes a quality of service (QoS) data frame or a resource request message frame.

Optionally, in the embodiments of the present disclosure, the method further includes the following steps.

In step 404, the AP device sends a response frame.

The response frame includes link bitmap information and/or transmission start time information of the low-latency service.

Optionally, in the embodiments of the present disclosure, the link bitmap information is set to a first parameter value to identify that the low-latency service is transmitted on a first link corresponding to the link bitmap information, and the first link is a link mapped to the TID of the low-latency service.

Optionally, in the embodiments of the present disclosure, the STA supports an eMLSR mode, and the first link is an eMLSR link.

Optionally, in the embodiments of the present disclosure, the method further includes the following steps.

In step 404, the AP sends a trigger frame on the first link, where the trigger frame indicates an uplink transmission resource for transmitting data of the low-latency service.

Optionally, in the embodiments of the present disclosure, a TSF parameter of a transmit link of the first wireless frame is used as a time reference of the transmission start time information, and the transmission start time information includes, for each link, a TSF offset parameter relative to the TSF parameter of the transmit link.

The method for transmitting the wireless frame involved in the embodiments of the present disclosure may include at least one of the aforementioned steps and embodiments. For example, the step 401 may be implemented as an independent embodiment, the step 404 may be implemented as an independent embodiment, and the step 406 may be implemented as an independent embodiment but is not limited thereto.

In some embodiments, reference may be made to other optional implementations recorded before or after the description corresponding to FIG. 4.

The embodiments of the present disclosure also provide an apparatus for implementing any of the above methods, for example, an apparatus is provided, and the above apparatus includes a unit or module for implementing each step performed by the terminal in any of the above methods. For another example, another apparatus is also provided, including a unit or module for implementing each step performed by a network device (such as an access network device, a core network function node, a core network device, etc.) in any of the above methods.

It should be understood that a division of the unit or module in the apparatus is only a division of a logical function, and in actual implementation, they may be fully or partially integrated into one physical entity, or they may be physically separated. In addition, the unit or module in the apparatus may be implemented in a form of a processor calling software. For example, the apparatus includes a processor, the processor is connected to a memory, and instructions are stored in the memory. The processor calls the instructions stored in the memory to implement any of the methods or implement a function of the unit or module of the apparatus. The processor is, for example, a general-purpose processor, such as a central processing unit (CPU) or a microprocessor, and the memory is a memory inside the apparatus or a memory outside the apparatus. Alternatively, the unit or module in the apparatus may be implemented in a form of a hardware circuit, and the hardware circuit is designed to implement a function of some or all of the units or modules. The hardware circuit may be understood as one or more processors. For example, in an implementation, the hardware circuit is an application-specific integrated circuit (ASIC), and the functions of some or all of the units or modules are implemented by designing a logical relationship of components in the circuit. For example, in another implementation, the hardware circuit may be implemented by a programmable logic device (PLD). Taking a field programmable gate array (FPGA) as an example, which may include a large number of logic gate circuits, and a connection relationship between the logic gate circuits is configured by a configuration file, so as to implement the functions of some or all of the units or modules. All of the units or modules of the apparatus may be implemented in a form of a processor calling a software, or in the form of a hardware circuit, or in part by the processor calling the software and the rest by the hardware circuit.

In the embodiments of the present disclosure, the processor is a circuit with a signal processing capability. In an implementation, the processor may be a circuit with an instruction reading and an execution capability, such as a central processing unit (CPU), a microprocessor, a graphics processing unit (GPU) (which may be understood as a microprocessor), or a digital signal processor (DSP). In another implementation, the processor may implement certain functions through a logical relationship of the hardware circuit, and the logical relationship of the hardware circuit may be fixed or reconfigurable, such as a hardware circuit implemented by the application-specific integrated circuit (ASIC) or the programmable logic device (PLD), such as the FPGA. In a reconfigurable hardware circuit, a process of the processor loading a configuration document to implement a hardware circuit configuration may be understood as a process of the processor loading instructions to implement the functions of some or all of the units or modules. In addition, it may also be a hardware circuit designed for artificial intelligence, which may be understood as ASIC, such as a neural network processing unit (NPU), a tensor processing unit (TPU), a deep learning processing unit (DPU), etc.

FIG. 5 is a block diagram illustrating a station according to an embodiment of the disclosure. As shown in Fig. 5, the station 500 may include at least one of: a determining module 501, a sending module 502, or the like.

In some embodiments, the determining module 501 is configured to determine a first wireless frame, where the first wireless frame includes first identification information, and the first identification information identifies that the STA requests to wake up an access point device in a power-saving state to transmit uplink data. The sending module 502 is configured to transmit the first wireless frame.

Optionally, the determining module 501 is configured to perform at least one of the communication steps (such as step 201 or step 301, but not limited thereto) performed by the station 101 in any of the above methods, which will not be repeated here. The sending module 502 is configured to perform at least one of the steps, such as step 202, step 207, step 302, or step 308, but not limited thereto.

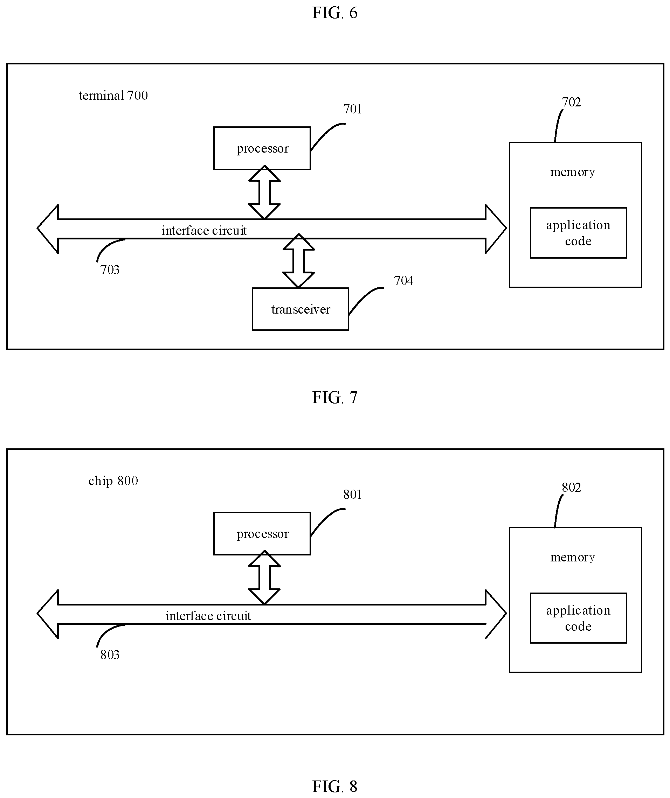

FIG. 6 is a block diagram illustrating an access point device according to an embodiment of the disclosure. As shown in FIG.6, the access point device 600 may include a first receiving module 601.

In some embodiments, the first receiving module 601 is configured to receive a first wireless frame.

The first wireless frame includes first identification information, and the first identification information identifies delay bound parameter information of a low-latency service transmitted by a station.

Optionally, the first receiving module 601 is configured to perform at least one of the communication steps (such as step 203, step 204, step 401, but not limited thereto) performed by the access point device 102 in any of the above methods, which will not be repeated here.

FIG. 7 is a block diagram illustrating a terminal 700 (such as a user device) according to an embodiment of the disclosure. The terminal 700 may be a chip, a chip system, or a processor, etc. that supports a network device to implement any of the above methods, or may be a chip, a chip system, or a processor, etc. that supports a terminal to implement any of the above methods. The terminal 700 may be configured to implement the method described in the above method embodiments, and the details may be referred to the description in the above method embodiments.

As shown in FIG. 7, the terminal 700 includes one or more processors 701. The processor 701 may be a general-purpose processor or a dedicated processor, for example, a baseband processor or a central processing unit. The baseband processor may be configured to process a communication protocol and communication data. The central processing unit may be configured to control a communication device (such as a base station, a baseband chip, a terminal device, a terminal device chip, a DU or a CU, etc.), perform a program, and process data of programs. The terminal 700 is configured to perform any of the above methods.

In some embodiments, the terminal 700 further includes one or more memories 702 for storing instructions. Optionally, all or part of the memories 702 may also be located outside the terminal 700.

In some embodiments, the terminal 700 further includes one or more transceivers 704. In a case that the terminal 700 includes one or more transceivers 704, the transceiver 704 performs at least one of communication steps such as sending and/or receiving in the above method (for example, step 202, step 203, step 204, step 205, step 206, step 207, step 302, step 305, step 308, step 401, step 404, step 406, but not limited thereto), and the processor 701 performs at least one of other steps (for example, step 201, step 301, but not limited thereto).

In some embodiments, the transceiver may include a receiver and/or a transmitter. The receiver and the transmitter may be separate or integrated. Optionally, terms such as transceiver, transceiver unit, transceiver circuit, etc. may be replaced with each other, the terms such as transmitter, transmission unit, transmitter, transmission circuit, etc. may be used interchangeably, and terms such as receiver, receiving unit, receiver, receiving circuit, etc. may be used interchangeably.

In some embodiments, the terminal 700 may include one or more interface circuits 703. Optionally, the interface circuit 703 is connected to the memory 702. The interface circuit 703 may be configured to receive signals from the memory 702 or other devices, and may be configured to send signals to the memory 702 or other devices. For example, the interface circuit 703 may read instructions stored in the memory 702 and send the instructions to the processor 701.

The terminal 700 described in the above embodiments may be the communication device such as the user device, but the scope of the terminal 700 described in the present disclosure is not limited thereto, and a structure of the terminal 700 may not be limited by FIG. 7. The communication device may be an independent device or may be part of a larger device. For example, the communication device may be: (1) an independent integrated circuit IC, or a chip, or a chip system or subsystem; (2) a collection of one or more ICs, optionally, the above IC collection may also include a storage component for storing data and programs; (3) an ASIC, such as a modem; (4) a module that may be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc.

FIG. 8 is a block diagram illustrating a chip 800 according to an embodiment of the disclosure. In the case where the terminal 700 may be a chip or a chip system, reference may be made to the schematic diagram illustrating the chip 800 shown in Fig. 8, but the present disclosure is not limited thereto.

The chip 800 includes one or more processors 801, and the chip 800 is configured to perform any of the above methods.

In some embodiments, the chip 800 further includes one or more interface circuits 803. Optionally, the interface circuit 803 is connected to a memory 802, and the interface circuit 803 may be configured to receive signals from the memory 802 or other devices. The interface circuit 803 may be used to send signals to the memory 802 or other devices. For example, the interface circuit 803 may read instructions stored in the memory 802 and send the instructions to the processor 801.

In some embodiments, the interface circuit 803 performs at least one of communication steps such as sending and/or receiving in the above method (such as step 202, step 203, step 204, step 205, step 206, step 207, step 302, step 305, step 308, step 401, step 404, step 406, but not limited thereto), and the processor 801 performs at least one of other steps (such as step 201, step 301, but not limited thereto).

In some embodiments, terms such as interface circuit, interface, transceiver pin, and transceiver may be used interchangeably.

In some embodiments, the chip 800 also includes one or more memories 802 for storing instructions. Alternatively, all or part of the memory 802 may be outside the chip 800.

The present disclosure also provides a storage medium for storing instructions that, when executed on a terminal 700, cause the terminal 700 to perform any of the above methods. Optionally, the storage medium is an electronic storage medium. Optionally, the storage medium is a computer-readable storage medium, but is not limited thereto, and it may also be a storage medium readable by other devices. Optionally, the storage medium may be a non-transitory storage medium, but is not limited thereto, and it may also be a temporary storage medium.

The present disclosure also provides a program product, and when the program product is executed by the terminal 700, cause the terminal 700 to perform any of the above methods. Optionally, the program product is a computer program product.

The present disclosure also provides a computer program, which, when executed on a computer, causes the computer to perform any one of the above methods.

## Claims

1. A method for transmitting a wireless frame, comprising:
determining, by a station (STA), a first wireless frame, wherein the first wireless frame comprises first identification information, and the first identification information identifies delay bound parameter information of a low-latency service transmitted by the station; and
transmitting the first wireless frame.

2. The method according to claim 1, wherein the first identification information comprises at least one of:
a transmission identifier (TID) of the low-latency service; or
a delay tolerance parameter of the low-latency service.

3. The method according to claim 1 or 2, wherein a lifetime of a data frame of the low-latency service is:
a duration indicated by the delay bound parameter information; or
a sum of a duration indicated by the delay bound parameter information and a duration indicated by a delay tolerance parameter.

4. The method according to claim 1, wherein a timing synchronization function (TSF) parameter of a transmit link of the first wireless frame is used as a time reference of the delay bound parameter information.

5. The method according to any one of claims 1-4, wherein the first wireless frame comprises a quality of service (QoS) data frame or a resource request message frame.

6. The method according to claim 1, further comprising:
receiving a response frame sent by an access point (AP) device,
wherein the response frame comprises link bitmap information and/or transmission start time information of the low-latency service.

7. The method according to claim 6, wherein the link bitmap information is set to a first parameter value to identify that the low-latency service is transmitted on a first link corresponding to the link bitmap information, and the first link is a link mapped to a TID of the low-latency service.

8. The method according to claim 7, further comprising:
receiving a trigger frame sent by the AP on the first link; and
transmitting data of the low-latency service based on an uplink transmission resource indicated in the trigger frame.

9. The method according to claim 6, wherein a TSF parameter of a transmit link of the first wireless frame is used as a time reference of the transmission start time information; and
the transmission start time information comprises, for each link, a TSF offset parameter relative to the TSF parameter of the transmit link.

10. A method for transmitting a wireless frame, comprising:
receiving, by an access point (AP) device, a first wireless frame, wherein the first wireless frame comprises first identification information, and the first identification information identifies delay bound parameter information of a low-latency service transmitted by a station; and
transmitting the first wireless frame.

11. The method according to claim 10, wherein the first identification information comprises at least one of:
a transmission identifier (TID) of the low-latency service; or
a delay tolerance parameter of the low-latency service.

12. The method according to claim 10 or 11, wherein a lifetime of a data frame of the low-latency service is:
a duration indicated by the delay bound parameter information; or
a sum of a duration indicated by the delay bound parameter information and a duration indicated by a delay tolerance parameter.

13. The method according to claim 10, wherein a timing synchronization function (TSF) parameter of a transmit link of the first wireless frame is used as a time reference of the delay bound parameter information.

14. The method according to any one of claims 10-13, wherein the first wireless frame comprises a quality of service (QoS) data frame or a resource request message frame.

15. The method according to claim 10, further comprising:
sending a response frame;
wherein the response frame comprises link bitmap information and/or transmission start time information of the low-latency service.

16. The method according to claim 15, wherein the link bitmap information is set to a first parameter value to identify that the low-latency service is transmitted on a first link corresponding to the link bitmap information, and the first link is a link mapped to a TID of the low-latency service.

17. The method according to claim 16, further comprising:
sending a trigger frame on the first link,
wherein the trigger frame indicates an uplink transmission resource for transmitting data of the low-latency service.

18. The method according to claim 15, wherein a TSF parameter of a transmit link of the first wireless frame is used as a time reference of the transmission start time information; and
the transmission start time information comprises, for each link, a TSF offset parameter relative to the TSF parameter of the transmit link.

19. A station (STA), comprising:
a determining module, configured to determine a first wireless frame, wherein the first wireless frame comprises first identification information, and the first identification information identifies that the STA requests to wake up an access point device in a power-saving state to transmit uplink data; and
a sending module, configured to transmit the first wireless frame.

20. An access point (AP) device, comprising:
a first receiving module, configured to receive a first wireless frame,
wherein the first wireless frame comprises first identification information, and the first identification information identifies delay bound parameter information of a low-latency service transmitted by a station.

21. A station (STA), comprising:
one or more processors;
wherein the STA is configured to perform the method for transmitting the wireless frame according to any one of claims 1 to 9.

22. An access point (AP) device, comprising:
one or more processors;
wherein the AP device is configured to perform the method for transmitting the wireless frame according to any one of claims 10 to 18.

23. A communication device, comprising a station (STA) and an access point (AP) device, wherein the STA is configured to implement the method for transmitting the wireless frame according to any one of claims 1 to 9, and the AP device is configured to implement the method for transmitting the wireless frame according to any one of claims 10 to 18.

24. A storage medium for storing instructions that, when executed on a communication device, cause the communication device to implement the method for transmitting the wireless frame according to any one of claims 1 to 9 or the method for transmitting the wireless frame according to any one of claims 10 to 18.
